# EUROPÄISCHE PATENTSCHRIFT

(11) **EP 1 303 034 B1**
(45) Veröffentlichungstag und Bekanntmachung des Hinweises auf die Patenterteilung: **20.07.2005**
(21) Anmeldenummer: 02020336.0
(22) Anmeldetag: 11.09.2002
(51) Int. Cl.: H02P 3/04

(54) **Antriebssystem**
Drive system
Système d'entraînement

(30) Priorität: 24.09.2001 DE 10146896
(43) Veröffentlichungstag der Anmeldung: 16.04.2003
(73) Patentinhaber: SIEMENS AKTIENGESELLSCHAFT, 80333 München (DE)
(72) Erfinder: Donat, Albrecht, 91462 Dachsbach (DE)

(56) Entgegenhaltungen:
- DD-B- 204 012
- DD-B- 204 013
- DE-A- 19 803 899
- US-A- 5 247 140
- PATENT ABSTRACTS OF JAPAN vol. 1996, no. 10, 31. Oktober 1996 (1996-10-31) & JP 08 144665 A (SANWA SHUTTER CORP), 4. Juni 1996 (1996-06-04)
- PATENT ABSTRACTS OF JAPAN vol. 2000, no. 16, 8. Mai 2001 (2001-05-08) & JP 2001 016881 A (MITSUBISHI ELECTRIC CORP), 19. Januar 2001 (2001-01-19)

## Beschreibung

Die Erfindung bezieht sich auf ein Antriebssystem, das einen Spannungszwischenkreis-Umrichter, einen Motor und eine Haltebremse aufweist, wobei die Haltebremse mechanisch und der Umrichter elektrisch mit dem Motor verbunden ist.

Ein derartiges Antriebssystem wird bei Antriebsapplikationen verwendet, bei denen im Stillstand der Motor in seiner Lage festgehalten werden muss. Zu diesen Appliaktionen zählen z.B. Aufzuge und Krane.

Bei diesem bekannten Antriebssystem weist die Haltebremse zu deren Betätigung ein Schütz, eine externe Gleichspannungsversorgung und eine Bremssteuereinheit auf. Diese externe Gleichspannungsversorgung ist elektrisch parallel zu den Anschlüssen der Haltebremse geschaltet, wobei in einer Verbindung das Schutz geschaltet ist. Dieses Schütz wird mittels der Bremssteuereinheit angesteuert, wobei dieser Bremssteuereinheit von einer übergeordneten Steuereinrichtung ein Bremssignal zugeführt wird.

Bei diesem bekannten Antriebssystem wirkt sich die externe Verdrahtung und der Einsatz eines Schutzes nachteilig aus. Die Schützverzögerungszeit ist nicht bekannt, wodurch auch die Bremsenschaltverzögerungszeit nicht bekannt ist. Dies fuhrt zu Schwierigkeiten in der Projektierung der Verzbgerungszeit zwischen Bremsansteuerung und Steuerung des den Motor speisenden Umrichter. D.h., sobald der Motor mittels der Haltebremse im Stillstand festgehalten wird, wird die Speisung des Motors durch den Umrichter nicht mehr benotigt, so dass die Impulse des Umrichters gesperrt werden.

Um das Problem der nicht bekannten Verzogerungszeiten zu entscharfen, ist bekannt, dass die Steuerung der Haltebremse nicht von einer Bremssteuereinheit, sondern vom Umrichter übernommen wird. Dadurch entfallen Totzeiten zwischen der Vorgabe durch eine Bremssteuereinheit und der internen Impulsfreigabe des Umrichters, der nun das Zeitverhalten der Bremsansteuerung und der Impulsfreigabe selbst regelt. Weiterhin weist die Haltebremse ein Schütz und eine externe Gleichspannungsversorgung auf, die miteinander verdrahtet sind.

Die deutsche Offenlegungsschrift DE 19803899 A1 offenbart ein Antriebssystem mit einem Gleichspannungszwischenkreisumrichter und einer Haltebremse, die einen Dreiphasenmotor anhält, wobei die elektrische Energie für die Bremse von einer gesonderten Gleichspannungsquelle bezogen wird.

Der Erfindung liegt nun die Aufgabe zugrund, das bekannte Antriebssystem derart weiterzubilden, dass deren verbleibenden Nachteile behoben werden.

Diese Aufgabe wird erfindungsgemäß mit den Merkmalen des kennzeichnenden Teils des Anspruchs 1 gelöst.

Dadurch, dass ein Anschluss der Haltebremse mit einem Sternpunkt-Anschluss des Motors und sein anderer Anschluss mittels eines Schaltmittels mit einem Minus-Anschluss des Spannungszwischenkreises des Umrichters verbunden ist, entfällt das Schütz und die externe Gleichspannungsversorgung.

Somit vereinfacht sich der Verdrahtungsaufwand wesentlich, wodurch nur eine zusatzliche Leitung mit einem Schaltmittel zwischen Umrichter und Motor geführt werden muss. Die elektrische Verbindung eines Anschlusses der Haltebremse mit dem Sternpunkt-Anschluss des Motors verläuft direkt zwischen Haltebremse und Motor. Mittels dieses Schaltmittels wird in Abhängigkeit eines Bremssignals der Bremsschaltkreis geschlossen. Dadurch liegt an der Haltebremse eine Spannung an, wodurch die Haltebremse gelüftet wird.

Bei einem zweiten Antriebssystem wird die Aufgabe erfindungsgemäß mit den Merkmalen des kennzeichnenden Teils des nebengeordneten Anspruchs 2 gelöst.

Bei dieser erfindungsgemäßen Lösung ist der eine Anschluss der Haltebremse nicht mittels eines Schaltmittels mit dem Minus-Anschluss des Spannungszwischenkreises des Umrichters verbunden, sondern direkt mit einem Mittelpunkt-Anschluss dieses Spannungszwischenkreises.

Durch diese Verbindung liegt an der Haltbremse bei normalen Motorbetrieb keine Spannung an, da die Spannung am Sternpunkt-Anschluss im Mittel gleich der Spannung am Mittelpunkt-Anschluss des Spannungszwischenkreises des Umrichters ist. Damit die Haltebremse gelüftet werden kann, werden die Strangspannungen des Motors mit einer Offsetspannung beaufschlagt, die dann an der Haltebremse anliegt. Somit entfällt das Schaltmittel, wodurch ein Standard-Umrichter mit Mittelpunkt-Anschluss des Spannungszwischenkreises verwendet werden kann. D.h., es muss nur eien weitere Leitung zwischen Umrichter und Motor mit Haltebremse geführt werden.

Zur weiteren Erläuterung der Erfindung wird auf die Zeichnung Bezug genommen, in der mehrere Ausfuhrungsformen eines erfindungsgemaßen Antriebssystems schematisch veranschaulicht sind.
- FIG 1: zeigt eine erste Ausführungsform des Antriebssystems nach der Erfindung, wobei in der
- FIG 2: eine zweite Ausfuhrungsform des erfindungsgemäßen Antriebssystems dargestellt ist.

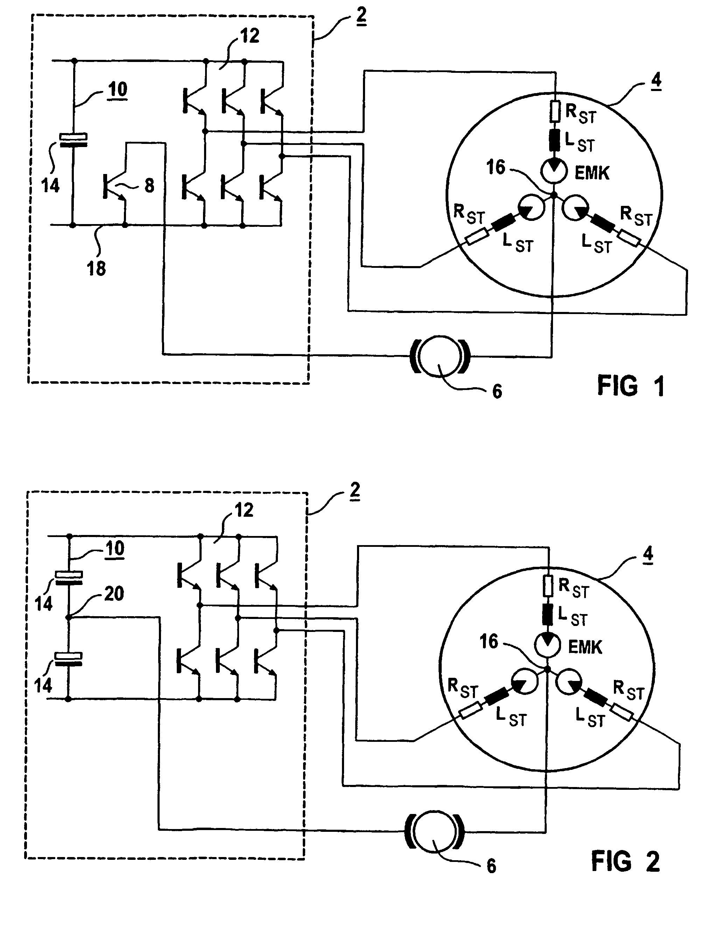

In der FIG 1 sind mit 2 ein Spannungszwischenkreis-Umrichter, mit 4 ein Motor, insbesondere ein Synchronmotor, mit 6 eine Haltebremse und mit 8 ein Schaltmittel bezeichnet. Vom Spannungszwischenkreis-Umrichter sind wegen der Übersichtlichkeit nur der Spannungszwischenkreis 10 und der lastseitige Stromrichter 12, der auch als Wechselrichter bezeichnet wird, dargestellt. Bei einem Standard-Umrichter weist der Umrichter netzseitig noch einen ungesteuerten Stromrichter, der als Gleichrichter bezeichnet wird, auf. Der in dieser Darstellung gezeigte Spannungszwischenkreis 10 weist keinen Mittelpunkt-Anschluss auf. Dies ist dadurch gekennzeichnet, dass nur ein Elektrolytkondensator 14 im Ersatzschaltbild dargestellt ist. Mit diesem Spannungszwischenkreis 10 ist der Wechselrichter 12 gleichspannungsseitig verknüft, wobei wechselspannungsseitig am Wechselrichter 12 der Motor 4 angeschlossen ist.

Die Haltebremse 6 ist mit einem Anschluss mit den Sternpunkt-Anschluss 16 des Motors 4 und mit seinem zweiten Anschluss mittels des Schaltmittels 8 mit dem Minus-Anschluss 18 des Spannungszwischenkreises 10 verknüft. Als Schaltmittel 8 ist ein abschaltbarer Halbleiterschalter vorgesehen, der in dieser Ausführungsform Bestandteil des Spannungszwischenkreis-Umrichters 2 ist. Dieses Schaltmittel 8 kann auch außerhalb des Umrichters 2 angeordnet sein, wobei dann der Minus-Anschluss 18 des Spannungszwischenkreis-Umrichters 2 zugänglich sein muss.

Sobald ein Bremssignal vorliegt, wird das Schaltmittel 8 betatigt, wodurch der Bremsschaltkreis geschlossen wird. Dadurch liegt an der Haltebremse 6 eine Spannung an, die annähernd der halben Zwischenkreisspannung entspricht. Diese Spannung entsteht im normalen Motorbetrieb dadurch, dass das Potential des Sternpunkt-Anschlusses 16 im Mittel Null ist und das Potential des Minus-Anschlusses 18 negativ ist. Ohne dieses Schaltmittels 8 wurde ständig diese Spannung an der Haltebremse 6 anstehen, wodurch der Motor 4 nie freigegeben würde. Diese Ausführungsform wird bevorzugt, wenn der Spannungszwischenkreis 10 keinen Mittelpunkt-Anschluss aufweist.

In der FIG 2 ist das Ersatzschaltbild einer zweiten Ausfuhrungsform des erfindungsgemäßen Antriebssystems näher dargestellt. Diese Ausführungsform unterscheidet sich von der Ausführungsform nach FIG 1 dadurch, dass der Spannungszwischenkreis 10 nun einen Mittelpunkt-Anschluss 20 aufweist. Dies ist dadurch veranschaulicht, dass der Spannungszwischenkreis 10 zwei Elektolytkondensatoren 14 aufweist, die elektrisch in Reihe geschaltet sind. Ansonsten entspricht diese Ausführungsform der der FIG 1.

Bei normalem Motorbetrieb liegt das mittlere Potential des Sternpunkt-Anschlusses 16 auf dem Potential der halben Zwischenkreisspannung. Auch der Mittelpunkt-Anschluss 20 des Spannungszwischenkreises 10 liegt auf dem Potential der halben Zwischenkreisspannung. Somit liegt an der Haltebremse 6 wahrend eines normalen Motorbetriebes im Mittel keine Spannung an.

Aufgrund eines Bremssignals werden die Strangspannungen des Motors 4 derartig generiert, dass jede Strangspannung mit einer Gleichspannung beaufschlagt ist. Diese Gleichspannung wird als Offsetspannung bezeichnet und hat jeweils einen Wert, der einer Lösespannung der Haltebremse 6 entspricht. Mittels der Offsetspannungen ist das Potential am Sternpunkt-Anschluss 16 um den Wert dieser Offsetspannung hoher als das Potential am Mittelpunkt-Anschluss 20 des Spannungszwischenkreises 10 des Umrichters 2. Dadurch liegt diese Offsetspannung als Lösespannung an der Haltebremse 6 an.

Durch die Beaufschlagung des Offsets der drei Strangspannungen kann somit die Haltebremse 6 direkt aus dem Umrichter 2 heraus angesprochen werden. Damit ergeben sich folgende Vorteile:
- Reduktion der Leiteranzahl in der Motorzuleitung,
- Keine externen Komponenten wie ein Schütz oder Gleichspannungsversorgung erforderlich,
- Keine Projektierung der Bremsverzogerungszeit erforderlich, da alle erforderlichen Zeiten dem Umrichter 2 zur Verfügung stehen, und
- Kenntnis des Bremsstroms und damit des Zeitpunktes, ab dem die Haltebremse 6 gelüftet ist.

Im Handel sind Motoren 4 mit integrierter Haltebremse 6 erhältlich. Wird eine solche Kombination bei einem erfindungsgemäßen Antriebssystem verwendet, so kann die elektrische Verbindung eines Anschlusses der Haltebremse 6 mit dem Sternpunkt-Anschluss 16 des Motors 2 intern fest verdrahtet sein. Somit müssten nur vier Leitungen zwischen Umrichter 2 und Motor 4 mit integrierter Haltebremse 6 angeschlossen werden.

## Patentansprüche

1. Antriebssystem, das einen Spannungszwischenkreis-Umrichter (2), einen Motor (4) und eine Haltebremse (6) aufweist, wobei die Haltebremse (6) mechanisch und der Umrichter (2) elektrisch mit dem Motor (4) verbunden ist, **dadurch gekennzeichnet, dass** die Haltebremse (6) mit einem ersten Anschluss mit einem Sternpunkt-Anschluss (14) des Motors (4) und sein zweiter Anschluss mittels eines Schaltmittels (8) mit einem Minus-Anschluss (18) des Spannungszwischenkreises (10) des Umrichters (2) verbunden ist.

2. Antriebssystem, das einen Spannungszwischenkreis-Umrichter (2), einen Motor (4) und eine Haltebremse (6) aufweist, wobei die Haltebremse (6) mechanisch und der Umrichter (2) elektrisch mit dem Motor (4) verbunden ist, **dadurch gekennzeichnet, dass** die Haltebremse (6) mit einem ersten Anschluss mit einem Sternpunkt-Anschluss (14) des Motors (4) und sein zweiter Anschluss mit einem Mittelpunkt-Anschluss (20) des Spannungszwischenkreises (10) des Umrichters (2) verbunden ist.

3. Antriebssystem nach Anspruch 1, **dadurch gekenn zeichnet**, dass das Schaltmittel (8) Betsandteil des Umrichters (2) ist.

4. Antriebssystem nach Anspruch 1, **dadurch gekenn zeichnet**, dass das Schaltmittel (8) ein abschaltbarer Halbleiter ist.

5. Antriebssystem nach Anspruch 1 oder 2, **dadurch ge-kennzeichnet, dass** die Haltebremse (6) eien elektrisch lüftbare magnetische Bremse ist.

6. Antriebssystem nach einem der vorgenannten Anspruche, **da-durch gekennzeichnet, dass** der Motor (4) ein Synchronmotor ist.

7. Antriebssystem nach Anspruch 1 oder 2, **dadurch ge-kennzeichnet, dass** der Motor (4) und die Haltebremse (6) eine Baueinheit bilden.

## Claims

1. Drive system which has a converter (2) with a voltage intermediate circuit, a motor (4) and a holding brake (6), whereby the holding brake (6) is mechanically connected to the motor (4) and the converter (2) is electrically connected to the motor (4), **characterised in that** the holding brake (6) is connected by a first terminal to a neutral terminal (14) of the motor (4) and by a second terminal to a negative terminal (18) of the voltage intermediate circuit (10) of the converter (2) via a switching device (8).

2. Drive system which has a converter (2) with a voltage intermediate circuit, a motor (4) and a holding brake (6), whereby the holding brake (6) is mechanically connected to the motor (4) and the converter (2) is electrically connected to the motor (4), **characterised in that** the holding brake (6) is connected by a first terminal to a neutral terminal (14) of the motor (4) and by a second terminal to a midpoint connection (20) of the voltage intermediate circuit (10) of the converter (2).

3. Drive system according to Claim 1, **characterised in that** the switching device (8) is part of the converter (2).

4. Drive system according to Claim 1, **characterised in that** the switching device (8) is a semiconductor which can be switched off.

5. Drive system according to Claim 1 or 2, **characterised in that** the holding brake (6) is an electrically ventable magnetic brake.

6. Drive system according to one of the preceding claims, **characterised in that** the motor (4) is a synchronous motor.

7. Drive system according to Claim 1 or 2, **characterised in that** the motor (4) and the holding brake (6) form a structural unit.

## Revendications

1. Système d'entraînement? qui comprend un convertisseur pour circuit intermédiaire de tension (2), un moteur (4) et un frein d'arrêt (6), le frein d'arrêt (6) ayant une liaison mécanique et le convertisseur (2) une liaison électrique avec le moteur (4),
**caractérisé en ce que** le frein d'arrêt (2) est relié par une première borne à une borne de point neutre (14) du moteur (4) et par sa deuxième borne à une borne négative (18) du circuit intermédiaire de tension (10) du convertisseur (2) par l'intermédiaire d'un moyen de commutation (8).

2. Système d'entraînement qui comprend un convertisseur pour circuit intermédiaire de tension (2), un moteur (4) et un frein d'arrêt (6), le frein d'arrêt (6) ayant une liaison mécanique et le convertisseur (2) une liaison électrique avec le moteur (4),
**caractérisé en ce que** le frein d'arrêt (2) est relié par une première borne à une borne de point neutre (14) du moteur (4) et par sa deuxième borne à une borne médiane (20) du circuit intermédiaire de tension (10) du convertisseur (2).

3. Système d'entraînement selon la revendication 1, **caractérisé en ce que** le moyen de commutation (8) fait partie du convertisseur (2).

4. Système d'entraînement selon la revendication 1, **caractérisé en ce que** le dispositif de commutation (8) est un semi-conducteur qui peut être bloqué.

5. Système d'entraînement selon la revendication 1 ou 2, **caractérisé en ce que** le frein d'arrêt (6) est un frein magnétique à desserrement électrique.

6. Système d'entraînement selon l'une des revendications précédentes, **caractérisé en ce que** le moteur (4) est un moteur synchrone.

7. Système d'entraînement selon la revendication 1 ou 2, **caractérisé en ce que** le moteur (4) et le frein d'arrêt (6) forment une unité de construction.
